Europäisches Patentamt

European Patent Office

Office européen des brevets

(19)

(11) Numéro de publication : **0 369 867 B1**

(12)  # FASCICULE DE BREVET EUROPEEN

(45) Date de publication du fascicule du brevet :
28.08.91 Bulletin 91/35

(51) Int. Cl.⁵ : **F02N 15/02, F16D 47/00**

(21) Numéro de dépôt : **89403109.5**

(22) Date de dépôt : **10.11.89**

(54) Lanceur de démarreur à roue libre comportant un limiteur de couple.

(30) Priorité : **14.11.88 FR 8814753**

(43) Date de publication de la demande :
**23.05.90 Bulletin 90/21**

(45) Mention de la délivrance du brevet :
**28.08.91 Bulletin 91/35**

(84) Etats contractants désignés :
**DE GB IT**

(56) Documents cités :
**FR-A- 2 333 974**
**GB-A- 2 091 949**
**US-A- 1 939 226**

(73) Titulaire : **VALEO EQUIPEMENTS
ELECTRIQUES MOTEUR
2 Rue Andre Boulle
F-94000 Creteil (FR)**

(72) Inventeur : **Froment, Francis
8, rue de Nazareth
F-69003 Lyon (FR)**

(74) Mandataire : **Gamonal, Didier
Société VALEO Service Propriété Industrielle
30, rue Blanqui
F-93406 Saint-Ouen Cédex (FR)**

## Description

La présente invention concerne les lanceurs de démarreur pour moteur à combustion interne du genre comportant une roue libre.

On sait que les lanceurs du genre en question ont l'inconvénient de présenter une durée de vie relativement courte de leur roue libre lorsque le moteur à combustion interne a un fonctionnement erratique, par exemple s'il existe de fréquents retours d'allumage, des blocages mécaniques, etc... ou qu'on assiste à des chocs consécutifs des organes disposés en amont et en aval du moteur.

Ces anomalies entraînent des couples supérieurs à la valeur de celui maximal produit par le moteur de démarreur, de sorte que le coincement des galets entre la cage extérieure de la roue libre et sa piste intérieure s'effectue sous une charge trop importante qui détériorent lesdites cages et pistes.

On a déjà prévu, avant l'application d'une roue libre au lanceur d'un démarreur, d'équiper celui-ci d'un dispositif d'embrayage et de débrayage automatique remplaçant la roue libre, mais bien entendu le résultat obtenu est beaucoup moins intéressant que celui auquel on arrive en utilisant une telle roue libre.

Aussi pour éviter les inconvénients cités plus haut, on a déjà prévu avec l'application d'une roue libre, d'adjoindre à celle-ci des moyens de friction en vue de limiter le couple transmis à la douille d'entraînement par la roue libre.

C'est ainsi qu'un système limiteur de couple de ce genre a été décrit dans la demande de brevet français 8707355 du 21 Mai 1987 (EP-A-292347) et dans lequel les moyens de friction sont constitués entre autre d'une garniture de friction fixée par collage ou tout autre moyen sur la face arrière de la cage de la roue libre.

Bien que techniquement, cette solution donne satisfaction, il demeure certaines difficultés provenant des poussières, des corps étrangers et d'humidité pénétrant par l'invervalle ouvert du carter du démarreur à travers lequel le pignon entraîné par le lanceur engrène avec la couronne dentée du moteur à combustion interne à lancer.

Il s'ensuit notamment un gommage de la garniture de friction qui modifie le coefficient de frottement des pièces en friction et conséquemment un mauvais fonctionnement du limiteur de couple.

La présente invention a pour but de minimiser les effets des rentrées de poussière et humidité, et plus particulièrement sur les moyens de friction du limiteur de couple associé à la roue libre du lanceur.

Elle concerne à cet effet un lanceur de démarreur pour moteur à combustion interne du genre comportant une roue libre dont la cage à cames est solidaire de sa douille d'entraînement, tandis que sa piste inférieure est prolongée par le pignon de lancement, la cage et la douille étant réalisées en deux éléments distincts assemblés entre eux par des moyens de friction en vue de limiter le couple transmis à sa douille qui la porte par la roue libre ou vice versa remarquable par le fait que les moyens de friction sont constitués par un disque d'entraînement métallique solidaire en rotation avec la cage et pris en sandwich entre deux rondelles de friction également métalliques et solidaires en rotation avec la douille d'entraînement, lesquels disque et rondelles sont en appui l'une sur l'un et l'autre contre la face arrière de ladite cage sous l'effet de moyens élastiques.

Les dessins annexés donnés à titre d'exemples, permettront de mieux comprendre l'invention, les caractéristiques qu'elle présente et les avantages qu'elle est susceptible de procurer :

— la figure 1 est une coupe longitudinale d'un lanceur établi conformément à l'invention ;

— la figure 2 est une vue analogue à la figure 1 mais suivant une variante de réalisation ;

— la figure 3 est une vue montrant une autre variante de réalisation de l'invention se rapportant au mode de réalisation de la figure 2 mais pouvant s'appliquer évidemment au mode d'exécution représenté sur la figure 1.

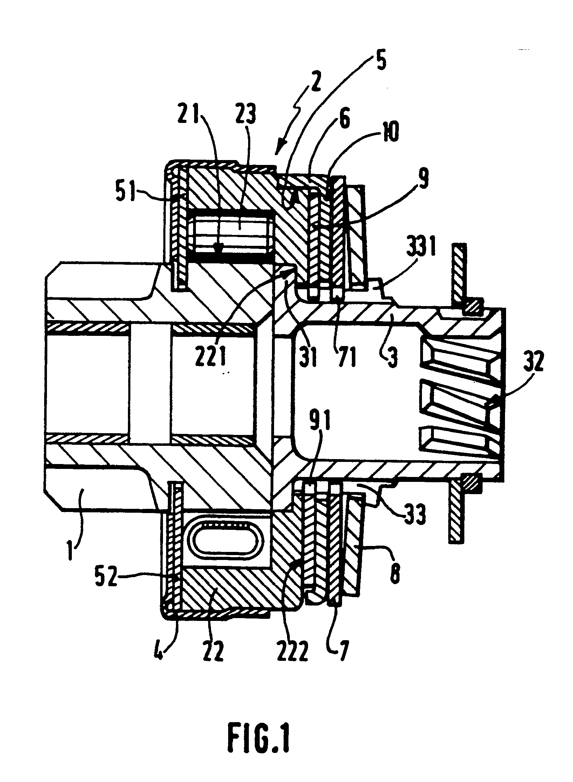

On a représenté en figure 1 un lanceur de démarreur électrique pour moteur à combustion interne comprenant un pignon de lancement 1 prolongé par une partie arrière qui constitue la piste 21 d'une roue libre 2 dont la cage à cames 22 est associée de manière tournante à une douille d'entraînement 3. Bien entendu, entre la piste 21 et la cage 22 se trouve à la manière usuelle une série de galets chargés 23 et on ne décrira pas plus avant une telle roue libre.

Un capot d'assemblage 4, comme il est bien connu est serti sur la périphérie de la cage 22 et maintient deux demi-rondelles 51, 52 assurant la fermeture et l'étanchéité de la roue libre 2.

La cage 22 comprend un chambrage 221 de forme annulaire dans lequel vient s'engager une bride 31 de la douille 3. Le capot 4 maintient assemblés la douille 3, la cage 22 et le pignon 1, la bride 31 pouvant alors tourner librement par rapport à ladite cage et audit pignon.

Le lanceur est monté à coulissement par rapport à un arbre non représenté comportant des cannelures hélicoïdales propres à engrener avec une denture de même forme 32 portée par l'alésage de la douille 3 à la manière connue.

Conformément à l'invention, la face arrière de la cage 22, c'est-à-dire celle tournée vers la douille 3, comporte une portée 222 contre laquelle prennent appui deux rondelles de friction 7, 9 et un disque d'entraînement 10 pris en sandwich entre lesdites rondelles 7 et 9.

Le disque d'entraînement 10, obtenu en tôle d'acier ou analogue est empêché en rotation par rapport à la cage 22 de la roue libre (2) par l'intermédiaire d'au moins une patte 6 repliée d'équerre et venant se loger dans un évidement approprié (5) ménagé sur la périphérie de ladite cage 22.

Par contre les rondelles de friction 7, 9, obtenues en alliage de cuivre ou analogue sont empêchées en rotation par rapport à la douille d'entraînement 3 par l'intermédiaire d'ergots respectifs 71 et 91 prévus dans les alésages desdites rondelles et qui s'engagent dans une des cannelures droites 33 ménagées sur le pourtour de la douille 3 sur au moins une partie de leur longueur, cannelures 33 sur lesquelles le disque d'entraînement 10 est monté librement.

Une rondelle 8 dite Belleville est également engagée autour des cannelures 33.

L'extrémité libre des cannelures est refoulée pour former une collerette 331 destinée à maintenir en pression la rondelle 8 contre les rondelles 7 et 9 et le disque 10.

La pression d'appui et par conséquent le couple d'entraînement de la cage 22 et de la douille 3 est déterminée ainsi par la tension de la rondelle Belleville 8.

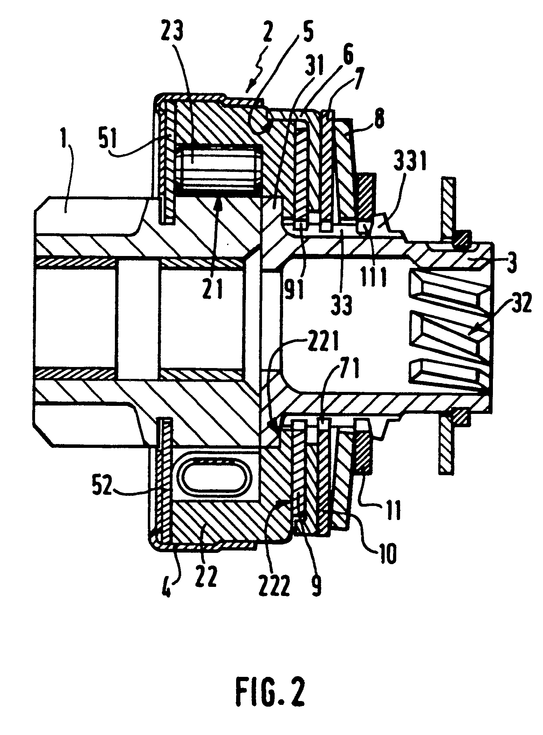

Suivant un autre mode de réalisation illustré en figure 2, il est prévu pour charger la rondelle Belleville 8, une bague annulaire plate 11 dont l'alésage porte au moins un ergot 111 coopérant avec l'une des cannelures 33 de la périphérie de la douille 3.

Le fonctionnement est le suivant : en marche normale, la cage 22 et la douille 3 sont solidarisées par l'appui de la rondelle 7 contre le disque d'entraînement 10 lui-même en appui contre la rondelle 9, de sorte que ces organes 7, 9 et 10 se comportent comme s'ils ne faisaient qu'une seule et même pièce. Par contre si des efforts supérieurs à ceux normaux se font jour, par exemple si le couple résistant appliqué au pignon 1 est supérieur au couple moteur appliqué à la douille 3, le système élastique de frottement agit comme un limitateur de couple. On évite ainsi soit de provoquer des surchauffes du moteur électrique d'entraînement de démarreur, soit la détérioration de piste et/ou de la cage 3 à cames de la roue libre 2.

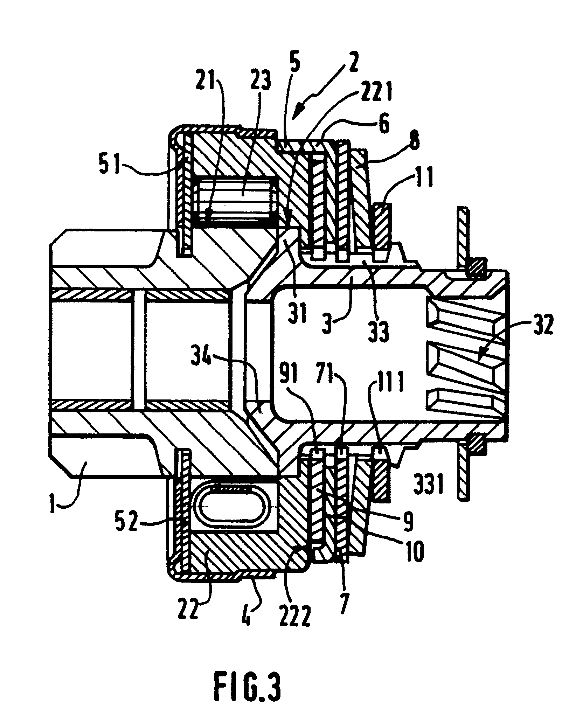

Comme illustré en figure 3, la douille peut comprendre un prolongement axial 34 s'imbriquant dans la piste intérieure 21 de manière à rapprocher l'extrémité libre de la douille 3 par rapport à la roue libre 2, ce qui entraîne une diminution de longueur totale du lanceur et par conséquent du démarreur.

On a ainsi réalisé conformément à l'invention un lanceur de démarreur qui permet un dimensionnement plus juste de tous les éléments de la chaîne cinématique de la transmission de puissance qui étaient susdimentionnés pour résister aux chocs et autres incidents énoncés auparavant.

Ceci conduit à un allègement et à une réduction d'encombrement.

Il va de soi que les rondelles de friction 7 et 9 et le disque de transmission 10 pourraient être associés de toute autre manière à la cage 22 et à la douille 3.

Les rondelles 7 et 9 pourraient ainsi être montées libres sur les cannelures 33 et maintenues angulairement fixées avec la cage 22 tandis que le disque 10 en forme de simple rondelle comporterait au moins un ergot sur la périphérie de son alésage adapté à s'ancrer dans les cannelures 33.

Il doit d'ailleurs être entendu que la description qui précède n'a été donnée qu'à titre d'exemple de l'invention.

## Revendications

1. Lanceur de démarreur pour moteur à combustion interne du genre comportant une roue libre (2) dont la cage à cames (22) est solidaire de sa douille d'entraînement (3), tandis que sa piste inférieure (21) est prolongée par le pignon de lancement (1), la cage (22) et la douille (3) étant réalisées en deux éléments distincts assemblés entre eux par des moyens de friction (7, 9, 10), en vue de limiter le couple transmis à sa douille qui la porte par la roue libre ou vice versa caractérisé en ce que les moyens de friction sont constitués par un disque d'entraînement (10) métallique solidaire en rotation avec la cage (22) et pris en sandwich entre deux rondelles de friction (7, 9) également métalliques et solidaires en rotation avec la douille d'entraînement (3) lesquels disque (10) et rondelles (7, 9) sont en appui l'une (7) sur l'un (10) et l'autre (9) contre la face arrière (222) de ladite cage (22) sous l'effet de moyens élastiques (8).

2. Lanceur de démarreur selon la revendication 1 caractérisé en ce que le disque d'entraînement (10) monté libre sur des cannelures (33) de la douille (3) comporte au moins une patte repliée d'équerre (6) dirigée vers la cage (22) dans un évidement (5) correspondant sur la périphérie de laquelle elle se fixe angulairement.

3. Lanceur de démarreur selon la revendication 2 caractérisé en ce que le disque (10) d'entraînement est réalisé en tôle d'acier.

4. Lanceur de démarreur selon la revendication 1 caractérisé en ce que les rondelles de friction (7, 9) sont réalisées en alliage de cuivre.

5. Lanceur de démarreur selon l'une quelconque des revendications 1 et 4 caractérisé en ce qu'au moins un ergot (71, 91) est réalisé dans l'alésage des rondelles de friction (7, 9) apte à s'ancrer dans une cannelure droite (33) ménagée sur la douille (3).

## Patentansprüche

1. Anlasserantrieb für Verbrennungsmotor, enthaltend eine Freilaufkupplung (2), deren Nockenkäfig (22) fest mit der Antriebshülse (3) verbunden ist, während die untere Bahn (21) durch das Anlasserritzel (1) verlängert wird, wobei der Käfig (22) und die Hülse (3) aus zwei verschiedenen Elementen bestehen, die miteinander durch Treibmittel (7, 9, 10) verbunden sind, um das auf die tragende Hülse durch die Freilaufkupplung übertragene Moment zu begrenzen oder, umgekehrt, **dadurch gekennzeichnet, daß die** Reibmittel aus einer Metall-Mitnehmerscheibe (10) bestehen, die drehbeweglich mit dem Käfig (22) verbunden ist und in Verbundbauweise zwischen zwei Reibscheiben (7, 9) angeordnet ist, die ebenfalls aus Metall bestehen und drehbeweglich mit der Antriebshülse (3) verbunden sind, wobei die genannte Mitnehmerscheibe (10) und die Reibscheiben (7, 9) unter der Einwirkung von elastischen Mitteln (8) einmal (7) auf einer (10) und die andere (9) auf der hinteren Fläche (222) des genannten Käfigs (22) aufliegen.

2. Anlasserantrieb nach Anspruch 1, **dadurch gekennzeichnet, daß die Mitnehmerscheibe (10), die** frei an Riffelungen (33) der Hülse (3) angebracht ist, wenigstens eine umgebogene und dem Käfig (22) zugewandte Winkelklammer (6) in einer entsprechenden Aussparung (5) enthält, an deren Peripherie sie winklig befestigt ist.

3. Anlasserantrieb nach Anspruch 2, **dadurch gekennzeichnet, daß die Mitnehmerscheibe (10) aus** Stahlblech besteht.

4. Anlasserantrieb nach Anspruch 1, **dadurch gekennzeichnet, daß die Reibscheiben (7, 9) aus** Kupferlegierung bestehen.

5. Anlasserantrieb nach einem der Ansprüche 1 und 4, **dadurch gekennzeichnet, daß in der Bohrung** der Reibscheiben (7, 9) wenigstens ein Nocken (71, 91) ausgeführt ist, der zur Verankerung in einer geraden Riffelung (33) an der Hülse (3) geeignet ist.

## Claims

1. A starter drive for an internal combustion engine, of the kind comprising a one-way coupling (2), the camming cage (22) of which is fixed with respect to its driving sleeve (3), while its inner element (21) is extended by the starter pinion (1), the cage (22) and the sleeve (3) being two separate elements which are assembled together through friction means (7, 9, 10), whereby to limit the torque transmitted by the one-way coupling to the sleeve which carries it, or vice versa, characterised in that the friction means comprise a metallic driving disc (10), which is fixed with respect to the cage (22) for rotation therewith and which is sandwiched between two friction rings (7, 9), which are also metallic and which are fixed with respect to the driving sleeve (3) for rotation with it, with one (7) of the components comprising the disc (10) and rings (7, 9) being in engagement with another one (10) of the said components, while the remaining said component (9) engages against the rear face (222) of the said cage (22) under the force exerted by resilient means (8).

2. A starter drive according to Claim 1, characterised in that the driving disc (10), which is freely mounted on splines (33) of the driving sleeve (3), has at least one tab (6) bent back at right angles and directed towards the cage (22) in a corresponding recess (5), on the periphery of which it is secured circumferentially.

3. A starter drive according to Claim 2, characterised in that the driving disc (10) is made of sheet steel.

4. A starter drive according to Claim 1, characterised in that the friction discs (7, 9) are made of a copper alloy.

5. A starter drive according to either one of Claims 1 and 4, characterised in that at least one lug (71, 91) is formed in the bore of the friction rings (7, 9) whereby to be anchored in a straight groove (33) formed on the sleeve (3).

FIG.1

FIG. 2

FIG.3